# EUROPEAN PATENT APPLICATION

(11) **EP 4 290 897 A1**
(43) Date of publication of application: **13.12.2023**
(21) Application number: 23177398.7
(22) Date of filing: 05.06.2023
(51) Int. Cl.: H04W 4/38, G06N 20/00

(54) **SYSTEMS AND METHODS FOR ARTIFICIAL INTELLIGENCE INFERENCE PLATFORM AND SENSOR CUEING**

(30) Priority: 06.06.2022 US 202263349454 P
(71) Applicant: Palantir Technologies Inc., Denver, CO 80202 (US)
(72) Inventor: KANG, Elliot, New York (US); CROSS, Jonathan, Maryland (US); BI, Kevin, New York (US); CHEN, Qinfeng, New York (US); IMIG, Robert, Washington (US); FACKLER, Steven, Virginia (US); WOODWARD, Samantha, Alabama (US); REHMAN, Mueed Ur, New Jersey (US)
(74) Representative: Derry, Paul Stefan

(57) **Abstract**

Disclosed herein are systems and methods for sensor cueing. In one example, the method includes: receiving a model inference from a computing model using a first set of sensor data, the model inference associated with a target object; generating a sensor command based at least in part upon the model inference, the sensor command comprising one or more object parameters associated with the target object and one or more sensor parameters associated with a sensor; and transmitting the sensor command to the sensor via a sensor API.

## Description

### CROSS REFERENCE TO RELATED APPLICATION

This application claims priority to U.S. Provisional Application No. 63/349,454, filed June 6, 2022, incorporated by reference herein in its entirety for all purposes.

### TECHNICAL FIELD

Certain embodiments of the present disclosure are directed to systems and methods for using artificial intelligence (AI) models and other computational models. More particularly, some embodiments of the present disclosure provide systems and methods for sensor cueing associated with such models.

### BACKGROUND

Artificial intelligence (AI) is widely used in analyzing data to facilitate object detection, prediction, decision making, and other uses. For example, AI inference is a process of using AI models to make a prediction. AI inference often needs a large number of computing resources and memory resources.

Edge devices (e.g., devices with sensing and/or computing capability) can be deployed to dispersed locations on earth or in space. Some edge devices may include one or more sensors for collecting sensor data and/or one or more computing resources to process data (e.g., identifying objects). A satellite can include and/or integrate with edge devices. As an example, edge devices can be deployed to various areas to complete certain tasks.

Hence, it is generally desirable to improve the techniques for sensor cueing in AI platforms, in order to improve performance of the sensors used for AI model input.

### SUMMARY

Certain embodiments of the present disclosure are directed to systems and methods for using artificial intelligence (AI) models and other computational models. More particularly, some embodiments of the present disclosure provide systems and methods for sensor cueing associated with such models.

Disclosed are methods and systems for sensor cueing. According to some embodiments, the method includes: receiving a model inference from a computing model using a first set of sensor data, the model inference associated with a target object; generating a sensor command based at least in part upon the model inference, the sensor command comprising one or more object parameters associated with the target object and one or more sensor parameters associated with a sensor; and transmitting the sensor command to the sensor via a sensor API. The method is performed using one or more processors.

According to some embodiments, a system for sensor cueing includes one or more memories with instructions stored thereon and one or more processors configured to execute the instructions and perform operations. The operations include: receiving a model inference from a computing model using a first set of sensor data, the model inference associated with a target object; generating, by the one or more processors, a sensor command based at least in part upon the model inference, the sensor command comprising one or more object parameters associated with the target object and one or more sensor parameters associated with a sensor; and transmitting the sensor command to the sensor via a sensor API.

According to some embodiments, a method for sensor cueing includes: receiving a model inference from a computing model using a first set of sensor data, the model inference associated with a target object and a target area associated with the target object; transmitting the model inference to a user device; receiving, from the user device, a user input comprising an identification of the target object or the target area; generating a sensor command based at least in part upon the model inference and the user input, the sensor command comprising one or more object parameters associated with the target object, and one or more sensor parameters associated with a sensor; and transmitting the sensor command to the sensor via a sensor API. The method is performed using one or more processors.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

The accompanying drawings are incorporated in and constitute a part of this specification and, together with the description, explain the features and principles of the disclosed embodiments. In the drawings,
FIG. 1 depicts an illustrative diagram of an artificial intelligence (AI) platform (AIP) operation environment, in accordance with certain embodiments of the present disclosure;
FIG. 2 illustrates an AIP operation environment according to certain embodiments of the present disclosure;
FIG. 3 is a simplified diagram showing a method for AIP sensor cueing according to certain embodiments of the present disclosure;
FIG. 4 is a simplified diagram showing a method for AIP sensor cueing according to certain embodiments of the present disclosure;
FIG. 5 is an example implementation of a deployment environment for AIP, in accordance with certain embodiments of the present disclosure; and
FIG. 6 is a simplified diagram showing a computing system for implementing a system for sensor cueing according to one embodiment of the present disclosure.

### DETAILED DESCRIPTION

Conventional systems and methods implementing artificial intelligence (AI) models include many sensors that are incorporated into a system in order for multiple devices to be operated based on robust data analysis and decision-making that are performed by the AI models. In order for the AI models to make accurate decisions, it is important for the sensors to be able to generate and provide as much data as possible to be processed by the AI models. However, in some examples, doing so would increase the amount of data being generated and stored in the processing devices of the AI models as well as causing delayed response when the data transfer takes a longer period of time.

Various embodiments of the present disclosure can achieve benefits and/or improvements by a computing system incorporating multiple sensors and using AI models to process the sensor data, for example, at an edge device. In some embodiments, benefits include improvements, including, for example, improved control and improved performance of one or more sensors that are implemented with the AI models. In some embodiments, benefits include improving the performance of the one or more sensors by correcting sensor biases (e.g., incorrect target, incorrect setting, etc.) and/or removing erroneous information. In some embodiments, benefits include dynamically selecting, adding, updating, configuring, and managing AI models, allowing a model controller to select, manage, configure, deploy, add, update, start, replace, and/or remove one or more computing models within an AI Inference Platform (AIP) operation environment. In some embodiments, benefits include improved performance and adaptability of the AI infrastructure in different situations and environments by instantiating, updating, editing, or disconnecting one or more AI models according to received instructions and/or data.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g. 1 to 5 includes 1, 1.5, 2, 2.75, 3, 3.80, 4, and 5) and any range within that range.

Although illustrative methods may be represented by one or more drawings (e.g., flow diagrams, communication flows, etc.), the drawings should not be interpreted as implying any requirement of, or particular order among or between, various steps disclosed herein. However, some certain embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items, and, similarly, a subset or subgroup of items may include one or more items. A "plurality" means more than one. As used herein, for example, the term "receive" or "receiving" means obtaining from a data repository (e.g., database), from another system or service, from another software, or from another software component in a same software. In certain embodiments, the term "access" or "accessing" means retrieving data or information, and/or generating data or information.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information.

At least some embodiments of the present disclosure are directed to systems and methods for providing sensor cueing, for example, to control one or more sensors and/or to improve performance of one or more sensors. In certain embodiments, an AIP includes one or more sensor interfaces with one or more sensors and one or more model interfaces with one or more models. In some embodiments, the AIP receives model inferences (e.g., model processing results) and generates a sensor command based on the model inferences. In certain embodiments, the AIP transmits the sensor command to a sensor, for example, directing the sensor to collect sensor data associated with a target object or a target area. In some embodiments, the AIP system can improve the performance of the sensor, for example, correcting sensor biases or removing erroneous information.

At least some embodiments of the present disclosure are directed to systems and methods for selecting, adding, updating, configuring, and managing data computing models dynamically. In certain embodiments, an AIP includes a model controller to select, manage, configure, deploy, add, update, pause, stop, start, replace, and/or remove one or more computing models within the AIP operation environment. In some embodiments, the model controller (e.g., a software module or component) is configured to interact with one or more model repositories (e.g., a model marketplace, a model hub) and one or more container infrastructures to select, manage, configure, deploy, add, update, start, replace, and/or remove one or more computing models within the AIP operation environment.

According to certain embodiments, the one or more model repositories are disposed on in one or more cloud servers, one or more servers on the ground (e.g., not at the edge), one or more computing devices, and/or one or more other data repositories. In some examples, In some examples, the one or more container infrastructures run on one or more edge devices. As used herein, an edge device refers to a computing device operating at the edge (e.g., not at a central server, or a cloud center) that may or may not have connectivity, periodic or sustained, to one or more edge devices or one or more cloud or on ground servers. In some embodiments, an edge device is integrated with or disposed on a carrier (e.g., a vehicle, an aircraft, a satellite) deployed to a site with actions taken place. In certain embodiments, an edge device includes one or more sensors configured to collect data associated with the actions. In certain examples, at least one of the one or more container infrastructures runs on a computing device that is not an edge device. In some embodiments, a container infrastructure can instantiate, update, edit, or disconnect one or more models according to the received instructions (e.g., via an API) and/or data (e.g., configuration data).

In certain embodiments, the AIP orchestrates between input sensor data and output model data. For example, one or more components of AIP can utilize open standard formats (e.g., input data format, output data format). As an example, AIP takes care of the decoding of the input data, orchestration between processors and AI models, and then packages up the results into an open output format for downstream consumers (e.g., a software application). According to some embodiments, an AIP system includes one or more AIPs to orchestrate one or more sensors, one or more edge devices, one or more user devices (e.g., one or more computing devices), one or more models, one or more container infrastructures, and one or more model repositories. In certain embodiments, at least some of the one or more sensors, one or more edge devices, one or more user devices, one or more models, one or more container infrastructures, and one or more model repositories are each associated with an AIP.

According to some embodiments, one or more AIPs, one or more sensors, and one or more models are disposed in an edge device. For example, the edge device is a satellite, and the sensor is an orbiting sensor. As an example, an edge device is a computer device disposed on or integrated into an aircraft, a submarine, a satellite, and/or a vehicle. As an example, an edge device includes one or more sensors in the air, in the space, under the sea, in the water, on the land, and/or at other locations. In certain examples, an edge device is a physical device including one or more sensors, an AIP, and/or one or more model(s). As used herein, a model, or referred to as a computing model or as an algorithm, includes a model to process data. A model includes, for example, an AI model, a machine learning (ML) model, a deep learning (DL) model, an image computing model, a physics model, simple heuristics, rules, algorithms, a math model, other computing models, and/or a combination thereof. In some examples, the model is configured to generate an insight based on the processed sensor data.

According to certain embodiments, one or more models can be implemented on one or more processors (e.g., one or more central processing units (CPUs), one or more graphics processing units (GPUs), one or more digital signal processors (DSPs), one or more microprocessors, one or more FPGAs (Field Programmable Gate Arrays), one or more AI accelerators, one or more ASICs (Application Specific Integrated Circuits), one or more processors, etc.) utilizing certain respective computing resources, where a model can also be referred to as a model processor (e.g., a verification processor, a geo-registration processor, etc.). As used herein, an insight refers to an output of a computing model. In certain examples, the AIP is configured to process and/or transmit collected sensor data, processed sensor data, and/or the insight to a user device (e.g., a server, a base station, a center station, a center node, a computing device at a mothership, etc.), for example, via a software interface (e.g., an application programing interface) or via other physical and/or software communication channels (e.g. Ku band radio). As used herein, an API refers to any software interface coupling two or more software components including, for example, an application programming interface, a web service interface, and/or the like. In some embodiments, a software interface refers to a part of a software component or one or more software components interacting with another software component(s).

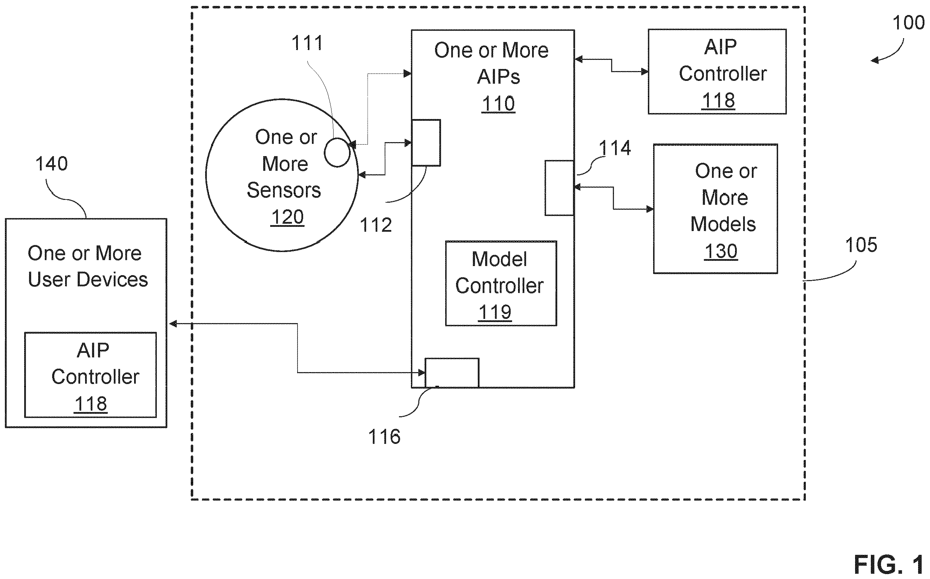

FIG. 1 illustrates an AIP operation environment 100 according to certain embodiments of the present disclosure. FIG. 1 is merely an example. One of ordinary skill in the art would recognize many variations, alternatives, and modifications. According to some embodiments, the AIP operation environment 100 includes one or more edge devices 105, one or more user devices 140, and/or one or more model repositories 160. In some examples, an AIP system includes one or more components in the AIP operation environment 100. According to certain embodiments, the one or more edge devices 105 include one or more AIPs 110, one or more AIP controllers 118, one or more sensors 120, and/or one or more models 130. In some embodiments, the one or more AIPs 110 include a model controller 119, a data API 112, an inference API 114, an open API 116, and/or a model API 117. In certain embodiments, the one or more sensors 120 include one or more sensor API 111. Although the above has been shown using a selected group of components for the AIP 110, there can be many alternatives, modifications, and variations. For example, some of the components may be expanded and/or combined. Other components may be inserted to those noted above. Depending upon the embodiment, the arrangement of components may be interchanged with others replaced. According to certain embodiments, AIP can dynamically adapt available model configurations for a set of data depending on the input data and insights generated from models. Further details of these components are found throughout the present specification.

According to some embodiments, the one or more models 130 include one or more computing models, such as AI models, machine learning models, deep learning models, image processing models, physics models, simple heuristics, rules, algorithms, math models, other computing models, and/or a combination thereof. For example, the one or more models 130 include one or more large language models (LLMs). In certain embodiments, at least a part of or all of the one or more models 130 include an open interface, for example, an interface interacted with or implemented by at least the inference API 114. In some embodiments, the one or more models 130 are configured to generate one or more model inferences. Models may optionally improve incoming sensor data or signal data quality issues to AIP.

According to certain embodiments, the data API 112 is configured to interface with the one or more sensors 120. In some examples, the data API 112 includes a specific data format (e.g., a predefined data format) or data stream format (e.g., a predefined data packet format) for a type of sensor. As an example, the data API 112 includes a first data format for a first sensor type (e.g., an image sensor) and a second data format for a second sensor type (e.g., a motion sensor), where the first data format is different from the second data format. For example, the data API 112 is configured to receive various sensor feeds. As an example, the data API 112 is configured to receive a sensor feed with data format information. In some embodiments, the data API 112 is defined in the AIP 110.

In certain examples, the AIP 110 is configured to receive sensor data via the data API 112. In some examples, the AIP 110 is configured to process the received sensor data received from the data API 112. In certain examples, the AIP 110 includes one or more models, computing units, and/or storage units. For example, the AIP 110 is configured to decode the sensor data. As an example, the AIP 110 is configured to extract a single frame from video data. In one example, the AIP 110 is configured to decode the extracted single frame. For example, the AIP 110 includes one or more AI models to recognize objects or patterns in the sensor data. As an example, the AIP 110 is configured to combine data.

In some examples, the AIP 110 and/or the inference API 114 is configured to couple (e.g., connect, operationally couple) to the one or more models 130. In certain examples, for a coupled (e.g., connected) model 130, the AIP 110 is configured to send commands, data, and parameters to the coupled model 130 and receive output data (e.g., memory location of the output data) from the coupled model 130. In some embodiments, the AIP 110 is configured to couple to the one or more models 130 via the inference API 114. In certain examples, the inference API 114 includes a predetermined interface to couple to the one or more models 130. In some examples, the inference API 114 includes a dynamically configurable interface to couple to the one or more models 130. In certain embodiments, the inference API 114 is configured and/or updated by the model controller 119. In some embodiments, the inference API 114 is configured and/or updated by the model controller 119 based upon information from the one or more container infrastructure 150. In certain embodiments, the inference API 114 is configured and/or updated by the model controller 119 and/or the AIP controller 118. In some embodiments, the interface specification is predetermined but the system can dynamically add and/or remove models and/or processors that conform to that specification at runtime. In certain embodiments, the interface specification is predetermined but the system can dynamically add and/or remove models and/or processors according to the information from the container infrastructure 150, and/or the model controller 119, at runtime.

In certain examples, the inference API 114 is configured to couple to the one or more models 130 based upon a configuration (e.g., a system configuration, a user configuration) and/or an input (e.g., a user input, an input received via a software interface). In some embodiments, the inference API 114 is configured to couple to the one or more models 130 based upon a configuration and/or an input that is set up by the model controller 119 and/or the container infrastructure 150. In some embodiments, the inference API 114 is configured to couple to the one or more models 130 automatically or dynamically based on the processed sensor data. In certain examples, the AIP 110 is configured to transmit processed sensor data to the one or more models 130 via the inference API 114.

According to some embodiments, the AIP 110 is configured to change the one or more models 130 coupled via the inference API 114 dynamically. In certain embodiments, the AIP 110 is configured to change the one or more models 130 dynamically when the AIP 110 is running. In some examples, the AIP 110 is configured to change the one or more models 130 based upon a configuration (e.g., a system configuration, a user configuration) and/or an input (e.g., a user input, an input received via a software interface). In certain examples, the AIP 110 is configured to update the one or more models 130 via the model controller 119 and/or the container infrastructure 150.

According to certain embodiments, the AIP 110 is configured to change the one or more models 130 automatically (e.g., based on a data characteristic) or dynamically based on the processed sensor data. As an example, the AIP 110 is configured to change the one or more models 130 in response to changes to the sensor data collected via the one or more sensors 120. In certain examples, the AIP 110 is configured to change the one or more models 130 without affecting the connection to the one or more sensors 120. In some examples, the AIP 110 is configured to upgrade the one or more models 130 without affecting the connection to the one or more sensors 120. In certain examples, the AIP 110 is configured to replace the one or more models 130 with a new model without affecting the connection to the one or more sensors 120. In some examples, the one or more models 130 is changed, upgraded, and/or replaced by a push operation in the deployment environment 100.

According to certain embodiments, the AIP 110 is configured to change the one or more sensors 120 coupled via the data API 112 dynamically. In certain examples, the AIP 110 is configured to change the one or more sensors 120 based upon a configuration (e.g., a system configuration, a user configuration) and/or an input (e.g., a user input, an input received via a software interface). In some examples, the AIP 110 is configured to change the one or more sensors 120 or add a coupled sensor automatically or dynamically, for example, based on a command (e.g., a sensor command) received via a software interface.

According to some embodiments, the AIP 110 is configured to interact with the corresponding sensor 120 to send one or more command(s) to the sensor and control how the sensor captures the data. In some embodiments, the AIP is configured to interact with the sensor to send one or more command(s) to the sensor and control how the sensor captures the data based on one or more user inputs and/or inference configurations. In one example, the AIP system is looking at a target (e.g., a car) or looking for a target (e.g., a car with specific characteristics). In some examples, the AIP 110 is configured to send a command to the sensor 120, where the sensor command includes one or more command parameters. In certain examples, the sensor command is sent via the sensor API 111. In some examples, the sensor command is compiled in complaint with the format of the sensor API 111.

In some embodiments, the command parameters include one or more target characteristics, one or more sensor parameters, one or more device parameters, and/or the like. For example, the one or more target characteristics include a type of object, a size of object, a color of object, a shape of object, a feature of object, and/or the like. In certain embodiments, the one or more sensor parameters include a type of sensor, a feature of sensor, a configuration of sensor, a sensing range, a sensing angle, a sensing time, and/or the like. In some examples, the sensor is an image sensor and the sensor parameters include a zooming parameter, a resolution parameter, a frame rate parameter, a gain parameter, a binning parameter, an image format parameter, and/or the like. In certain examples, the sensor includes an acoustic sensor, a transducer, an ultrasonic sensor, an infrared sensor, a hyperspectral sensor, and/or the like. In certain embodiments, the one or more device parameters include a location parameter, a position parameter, a speed parameter, and/or the like. In some examples, the command includes a command (e.g., action command) to follow the target, for example, a command of an edge device following movements of the target, a command of a sensor on the edge device following movements of the target, and/or a command of moving an edge device closer to the target.

According to certain embodiments, the AIP 110 is configured to receive one or more model inferences from the one or more models 130 via the inference API. In certain embodiments, the one or more model inferences include an identified target object and/or a target area. In some embodiments, the AIP 110 is configured to generate the sensor command based on the one or more model inferences. In certain embodiments, the AIP 110 is configured to send the sensor command to the sensor 120 via the sensor API 111.

According to some embodiments, the AIP 110 is configured to transmit the one or more model inferences to the one or more user devices 140, for example, via the open API 116. In certain embodiments, the user device 140 presents the model inferences to a user. In some embodiments, the user provides a user input via the user device. In some embodiments, the user input includes an identification of the target object. In certain embodiments, the user input includes an identification of the target area, for example, the target area associated with the target object. In some embodiments, the AIP 110 is configured to receive the user input from the user device 140, for example, via the open API 116. In certain embodiments, the AIP 110 is configured to generate the sensor command based on the user input. In some embodiments, the AIP 110 is configured to generate the sensor command based on the one or more model inferences and the user input. In certain embodiments, the AIP 110 is configured to send the sensor command to the sensor 120 via the sensor API 111.

According to certain embodiments, the AIP system include two modes of sensor cueing. In some embodiments, one mode of sensor cueing will use one or more user inputs. For example, the AIP receives a processing result from a computing model and the output of AIP is sent to a user device, where the user can see the processing result (e.g., the inferences), so that the user can interact with the processing result, for example, the user can identify the target object (e.g., a single object, two or more objects) in the processing result and request to track the target object. As another example, the user may request the sensor and the edge device to move closer to the target object or an area, and the AIP is configured to generate the sensor command incorporate such request. In some embodiments, using the sensor commands, the AIP system can collect more relevant sensor data that allows meaningful inferences.

In some embodiments, one mode of sensor cueing is based on one or more model inferences and model processing results. In certain embodiments, the one or more model inferences (e.g., model processing results) include an identification of a target object. In some embodiments, the one or more model processing results include an identification of an area. In certain embodiments, the one or more model inferences include an identification of an area associated with the target object. In some embodiments, the one or more model inferences include corresponding confidence levels. In certain examples, the AIP receives the model inferences and generates the sensor command based upon the model inferences, for example, using the target object, the area associated with the target object, and/or the confidence level.

According to certain embodiments, the AIP system is configured to use sensor cueing to improve the performance of the sensor, for example, to collect more relevant data from the sensor. In some embodiments, the AIP system is configured to improve one or more models, for example, by changing model parameters or by replacing one or more models, to improve the performance of the sensor.

In some examples, the AIP 110 is configured to receive one or more model inferences and/or one or more user inputs and generate the sensor command to send to the sensor 120. In certain examples, based on the sensor command, the sensor 120 is configured to adjust one or more sensor parameters. In some examples, the sensor 120 is configured to extract the one or more sensor parameters from the sensor command. In certain examples, the sensor 120 is configured to adjust one or more sensor parameters based on the command parameters in the sensor command. For example, the sensor 120 is configured to gather a set of sensor data (e.g., take images such as pictures/photographs or videos) of a smaller area (e.g., 3 by 3 miles) instead of a bigger area (e.g., 5 by 5 miles), or vice versa. In some examples, the AIP 110 is configured to receive better model inferences generated by models using the sensor data collected by the sensor 120.

According to some embodiments, the AIP controller 118 can be used to configure, control, and/or manage the one or more AIPs 110, including managing components to be coupled to the one or more AIPs 110. In certain examples, the AIP controller 118 is configured to send a request to the AIP 110 to make changes to the one or more sensors 120 and/or make changes to the one or more models 130. In certain embodiments, at least one of the one or more user devices 140 includes an AIP controller 118. In some embodiments, at least one of the one or more edge devices 105 includes an AIP controller 118. In some examples, the AIP controller 118 includes a user interface (e.g., a graphical user interface). In certain examples, the AIP controller 118 allows a user to select one or more algorithms to be added to a model 130, for example, via the model controller 119 and/or the container infrastructure 150. In some examples, the AIP controller 118 allows a user to select one or more algorithms to be updated to a model 130, for example, via the model controller 119 and/or the container infrastructure 150.

According to certain embodiments, the AIP controller 118 allows a user to select to deploy a new or updated model 130 to the AIP 110. In some embodiments, the AIP controller 118 allows a user to select to deploy a new or updated model 130 to the AIP 110, for example, via the model controller 119 and/or the container infrastructure 150. In some examples, the AIP controller 118 allows a user to configure a processing pipeline (e.g., order, schedule, latency, etc.) for using one or more models, one or more processors, and/or one or more edge devices. In some embodiments, the AIP controller 118 is configured to send a message (e.g., a low bandwidth message) to the AIP 110. In certain examples, in response to receiving the message, the AIP 110 updates the one or more models for deployment, for example, by loading the one or more models on the same hosting device or a local device (e.g., a computing device close by, a computing device connected via some network connection either wired or wireless).

According to some embodiments, the AIP 110, the one or more sensors 120, and the one or more models 130 are disposed in an edge device 105. For example, the edge device 105 is a satellite, and the sensor 120 is an orbiting sensor. As an example, an edge device is disposed on or integrated with an aircraft, a submarine, and/or a vehicle. As an example, an edge device includes one or more sensors in the air, in the space, under the sea, in the water, on the land, and/or at other locations. In certain examples, an edge device is a physical device including one or more sensors, an AIP, an AIP controller and/or one or more model(s). In some examples, the one or more models 130 is configured to generate an insight based on the processed sensor data. As used herein, an insight refers to an output of a computing model. In certain examples, the open API 116 is configured to couple to the user device 140. In some examples, the AIP 110 is configured to transmit collected sensor data, processed sensor data, and/or the insight to the user device 140. In certain examples, the open API 116 is configured to broadcast to a network.

According to certain embodiments, the AIP operation environment 100 includes one or more edge devices 105, one or more user devices 140, and/or one or more model repositories 160, each or in combination, may include or have access to one or more memory repositories (e.g., data repositories, application repositories). In some embodiments, the data repository(s) (not shown) can include sensor data, processed sensor data, model data, model configuration data, AIP configuration, and/or the like. The data repository and/or the application repository may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

In some cases, various components in the AIP operation environment 100 can execute software or firmware stored in non-transitory computer-readable medium (e.g., application repository) to implement various processing steps. Various components and processors of the operation software environment 100 can be implemented by one or more computing devices, including but not limited to, circuits, a computer, a cloud-based processing unit, a processor, a processing unit, a microprocessor, a mobile computing device, and/or a tablet computer. In some cases, various components of the operation software environment 100 (e.g., the one or more edge devices 105, the one or more user devices 140, etc.) can be implemented on a shared computing device. Alternatively, a component of the AIP operation environment 100 can be implemented on multiple computing devices. In some implementations, various modules and components of the operation software environment 100 can be implemented as software, hardware, firmware, or a combination thereof. In some cases, various components of the AIP operation environment 100 can be implemented in software or firmware executed by a computing device or in dedicated hardware components that can be attached to these computing devices.

Various components of the AIP operation environment 100 can communicate via or be coupled to via a communication interface, for example, a wired or wireless interface. The communication interface includes, but not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

As discussed above and further emphasized here, FIG. 1 is merely an example. One of ordinary skill in the art would recognize many variations, alternatives, and modifications. For example, a sensor 120 is replaced by a sub-system that includes one or more components that are not sensors. As an example, a one or more models 130 is a micro-model.

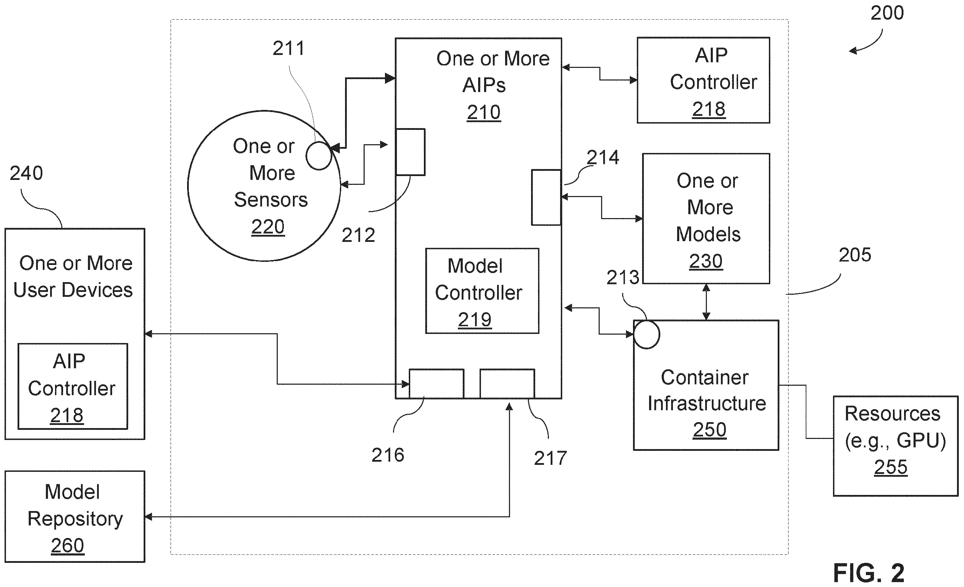

FIG. 2 illustrates an AIP operation environment 200 according to certain embodiments of the present disclosure. FIG. 2 is merely an example. One of ordinary skill in the art would recognize many variations, alternatives, and modifications. According to some embodiments, the deployment environment 200 includes one or more edge devices 205, one or more user devices 240, one or more resources 255 (e.g., processing units, GPUs, CPUs, etc.), and/or one or more model repositories 260. In some examples, an AIP system includes one or more components in the AIP operation environment 100. According to certain embodiments, the one or more edge devices 205 include one or more AIPs 210, one or more AIP controllers 218, one or more sensors 220, one or more models 230, and/or one or more container infrastructure 250. In some embodiments, the one or more AIPs 210 include a model controller 219, a data API 212, an inference API 214, an open API 216, and/or a model API 217. Although the above has been shown using a selected group of components for the AIP 210, there can be many alternatives, modifications, and variations. For example, some of the components may be expanded and/or combined. Other components may be inserted to those noted above. Depending upon the embodiment, the arrangement of components may be interchanged with others replaced. Further details of these components are found throughout the present specification.

According to some embodiments, the one or more models 230 include one or more computing models, such as AI models, machine learning models, deep learning models, image processing models, physics models, simple heuristics, rules, math models, other computing models, and/or a combination thereof. For example, the one or more models 230 include one or more large language models (LLMs). In certain embodiments, at least a part of or all of the one or more models 230 include an open interface, for example, an interface interacted with or implemented by at least the inference API 214. In some embodiments, the one or more models 230 can be instantiated by or configured and deployed by the one or more container infrastructures 250. In certain embodiments, the one or more models 230 can utilize resources (e.g., computing resources, storage resources) allocated and/or designated by the one or more container infrastructures 250. In some embodiments, a container infrastructure 250 may include a container API 213 to provide an interface with the container infrastructure 250.

According to certain embodiments, the model controller 219 receives a model request, for example, by a message, an input, an interaction from the AIP controller 218, or a configuration. In some embodiments, the model request includes request parameters. In certain embodiments, the request parameters include one or more of a type of computing model, an instance of a computing model, a processing characteristic, a data characteristic, and/or the like. In some embodiments, the model controller 219 is configured to extract request parameters from the model request. In certain examples, the type of the computing model may include a type of an ML model, a type of a DL model, a type of an AI model, a type of a computing model, and/or the like. In some examples, the instance of computing model may include a specific ML model, a specific DL model, a specific AI model, a specific computing model, and/or the like. In certain examples, the processing characteristic may include a video frame extraction, an imaging processing, an object recognition, a decoding, an encoding, and other data processing characteristic. In some examples, the data characteristic may include an input data type, an input data format, an input data volume, an input data range, an output data type, an output data format, and/or the like.

According to some embodiments, at least a part or all of the plurality of computing models are configured to be retrieved from the model repository 260 based on the model request and/or request parameters. In some embodiments, at least a part or all of the plurality of computing models are configured to be retrieved from the model repository 260 via the model API 217. In certain embodiments, the model API 217 is defined in the AIP 210. In some embodiments, the model controller 219 is configured to select one or more computing models based upon the model request.

According to certain embodiments, the model controller 219 is configured to compile a container request based on the model request. In certain embodiments, the container request includes a request using the container API 213. In some examples, the container API 213 is defined and/or updated by the container infrastructure 250. In certain examples, the container API 213 includes, for example, a container identifier, a type of computing model, an instance of a computing model, a processing characteristic, a data characteristic, and/or the like. In some embodiments, the container API 213 includes a part or all information of the model request. In certain embodiments, the model controller 219 is configured to extract model parameters from the model request to generate the container request in the format compliant with the container API 213. In some embodiments, the model controller 219 is configured to generate the container request using the request parameters extracted from the model request and/or the one or more selected models.

According to some embodiments, the model controller 219 is configured to send the container request to the container infrastructure 250. In certain embodiments, the model controller 219 receives information of a plurality of computing models from the container infrastructure 250. In certain embodiments, in response to the container request being sent, the model controller 219 receives information of a plurality of computing models from the container infrastructure 250. In some embodiments, the model controller 219 is configured to interact with the container infrastructure 250 using a controller interface (e.g., an API) of the AIP 210.

In certain embodiments, the model controller 219 is configured to provide an input including the one or more selected models to the container infrastructures. For example, the input includes memory locations of corresponding selected models. As an example, the input includes configurations and/or connection requirements of corresponding selected models. In certain examples, the input includes metadata corresponding to selected models. In some embodiments, the model controller 219 is configured to provide the input via the container API 213 (e.g., in the container API format) to the container infrastructure 250. In certain embodiments, upon receiving the input, the container infrastructure 250 is configured to instantiate the one or more selected computing models as a part of the one or more models 230. For example, the container infrastructure 250 is configured to start an instance (e.g., spin off an image of a model) of the one or more selected computing models. In some embodiments, the container infrastructure 250 is configured to update the one or more models 230 according to the one or more selected models, for example, adding, editing (e.g., changing parameter), updating (e.g., a new version), and/or disconnecting one or more models. In certain embodiments, the container infrastructure 250 is configured to allocate one or more resources associated with the one or more selected computing models (e.g., the one or more models 230).

According to some embodiments, the container infrastructure 255 is configured to monitor the one or more resources 255. In certain embodiments, the resources 255 include resources in a corresponding edge device 205. In some embodiments, the resources 255 include resources in a plurality of computing devices including one or more edge devices 205, one or more user devices 210, one or more servers (not shown) (e.g., cloud servers), and a combination thereof. In certain examples, the resources 255 include computing resources (e.g., processing resources) and various tiers of memory resources. In some examples, the container infrastructure 255 is configured to allocate a computing model at one GPU. In certain examples, the container infrastructure 255 is configured to allocate a computing model to run at more than one GPU. In some examples, the container infrastructure 255 is configured to determine when a first model becomes inactive and allocate the resources (e.g., 50% of an GPU, 2 GPUs) to a second model, for example, a newly selected model.

According to certain embodiments, the container infrastructure 255 is configured to determine whether a model is inactive by monitoring the usage of processing units, data in- and-out of the model, and a combination thereof. For example, a model is determined to be inactive if the allocated processing unit(s) have a relatively small percentage of usage. As an example, a model is determined to be inactive if no data is coming in (e.g., as input). In one example, the edge device 205 includes four (4) models running concurrently. In this example, if the container infrastructure 250 would like to spin up a fifth model, but no resource is available at the container infrastructure 250. In one example, the existing four (4) models may in multiple pipelines. For example, the container infrastructure 250 checks whether or not at least one of the four (4) models is active (e.g., actually being used). If not, the container infrastructure 250 can reallocate the GPU unit to the fifth model. In certain embodiments, the container infrastructure 250 is configured to virtualize the resources 255 (e.g., GPUs). In some examples, the container infrastructure 250 is configured to assign a fraction of a GPU to a model. In one example, the container infrastructure 255 may instantiate multiple models (e.g., 8 models) to run concurrently. In certain embodiments, the container infrastructure 255 is configured to allocate the one or more resources 255, via one or more corresponding resource controller (e.g., software control layer, software and hardware hybrid control).

According to some embodiments, the container infrastructure 250 is configured to set a prioritization for the one or more models 230 (e.g., selected models). For example, the container infrastructure 250 is configured to set a first model at a first priority level and a second model at a second priority level different from the first priority level. When a resource required by both the first model and the second model becomes available, the container infrastructure 250 is configured to assign the resource according to priority levels. For example, the container infrastructure 250 is configured to assign the resource to the first model if the first priority level is higher than the second priority level. In some embodiments, the container infrastructure 250 may allocate resources based at least in part upon the amount of resource required by a model.

According to some embodiments, the model controller 219 is configured to connect the one or more selected computing models to the AIP 210 via the inference API 214. In some examples, the inference API 214 is defined in the AIP 210. In certain examples, the inference API 214 is updated by the AIP 210. In certain examples, the inference API 214 is updated by the AIP 210 via the model controller 219. In certain embodiments, the model controller 219 is configured to create a processing pipeline using the one or more selected computing models based upon the model request. As used herein, a processing pipeline includes a plurality of computing models running sequentially or in parallel. For example, a processing pipeline includes a first and second computing model, where an output of the first computing model (e.g., an upstream model) is provided as an input of the second computing model (e.g., a downstream model). As an example, the processing pipeline includes the first computing model and a third computing model running in parallel. In some embodiments, the model controller 219 and/or the AIP 210 is configured to access the model repository 260 associated with the model request, for example, via the model API 217.

According to certain embodiments, the model controller 219 can provide a number of functionalities including, for example, processing unit allocation, CPU/GPU allocation, resource allocation, and also keeping mission cycle, automatic updating, and/or the like. In some examples, the model controller 219 implements a model update rule, for example, updating the model with a new release (e.g., a model version) every 60 days. In certain examples, the model controller 219 implements a model update rule, for example, updating the model only if certain criteria are satisfied (e.g., via a quality assurance check). For example, the model controller 219 allows a model version to be used after a validation on the model version's functionality and/or performance. In some embodiments, the model controller 219 is configured to monitor the model repository 260 on revisions of one or more models or new models. In certain embodiments, the model controller 219 is configured to receive one or more notifications on revisions of one or more models or new models becoming available. In some embodiments, the model controller 219 is configured to register the one or more models, new models, the versions of the models. In certain embodiments, the model controller 219 is configured to register the models and associated metadata (e.g., type, resource requirement, data characteristics, etc.), for example, in a data repository.

According to certain embodiments, the data API 212 is configured to interface with the one or more sensors 220. In some examples, the data API 212 includes a specific data format (e.g., a predefined data format) or data stream format (e.g., a predefined data packet format) for a type of sensor. As an example, the data API 212 includes a first data format for a first sensor type (e.g., an image sensor) and a second data format for a second sensor type (e.g., a motion sensor), where the first data format is different from the second data format. For example, the data API 212 is configured to receive various sensor feeds. As an example, the data API 212 is configured to receive a sensor feed with data format information. In some embodiments, the data API 212 is defined in the AIP 210.

In certain examples, the AIP 210 is configured to receive sensor data via the data API 212. In some examples, the AIP 210 is configured to process the received sensor data received from the data API 212. In certain examples, the AIP 210 includes one or more models, computing units, and/or storage units. For example, the AIP 210 is configured to decode the sensor data. As an example, the AIP 210 is configured to extract a single frame from video data. In one example, the AIP 210 is configured to decode the extracted single frame. For example, the AIP 210 includes one or more AI models to recognize objects or patterns in the sensor data. As an example, the AIP 210 is configured to combine data.

In some examples, the AIP 210 and/or the inference API 214 is configured to couple (e.g., connect, operationally couple) to the one or more models 230. In certain examples, for a coupled (e.g., connected) model 230, the AIP 210 is configured to send commands, data, and parameters to the coupled model 230 and receive output data (e.g., memory location of the output data) from the coupled model 230. In some embodiments, the AIP 210 is configured to couple to the one or more models 230 via the inference API 214. In certain examples, the inference API 214 includes a predetermined interface to couple to the one or more models 230. In some examples, the inference API 214 includes a dynamically configurable interface to couple to the one or more models 230. In certain embodiments, the inference API 214 is configured and/or updated by the model controller 219. In some embodiments, the inference API 214 is configured and/or updated by the model controller 219 based upon information from the one or more container infrastructure 250. In certain embodiments, the inference API 214 is configured and/or updated by the model controller 219 and/or the AIP controller 218. In some embodiments, the interface specification is predetermined but the system can dynamically add and/or remove models and/or processors that conform to that specification at runtime. In certain embodiments, the interface specification is predetermined but the system can dynamically add and/or remove models and/or processors according to the information from the container infrastructure 250, and/or the model controller 219, at runtime.

In certain examples, the inference API 214 is configured to couple to the one or more models 230 based upon a configuration (e.g., a system configuration, a user configuration) and/or an input (e.g., a user input, an input received via a software interface). In some embodiments, the inference API 214 is configured to couple to the one or more models 230 based upon a configuration and/or an input that is set up by the model controller 219 and/or the container infrastructure 250. In some embodiments, the inference API 214 is configured to couple to the one or more models 230 automatically or dynamically based on the processed sensor data. In certain examples, the AIP 210 is configured to transmit processed sensor data to the one or more models 230 via the inference API 214.

According to some embodiments, the AIP 210 is configured to change the one or more models 230 coupled via the inference API 214 dynamically. In certain embodiments, the AIP 210 is configured to change the one or more models 230 dynamically when the AIP 210 is running. In some examples, the AIP 210 is configured to change the one or more models 230 based upon a configuration (e.g., a system configuration, a user configuration) and/or an input (e.g., a user input, an input received via a software interface). In certain examples, the AIP 210 is configured to update the one or more models 230 via the model controller 219 and/or the container infrastructure 250.

According to certain embodiments, the AIP 210 is configured to change the one or more models 230 automatically (e.g., based on a data characteristic) or dynamically based on the processed sensor data. As an example, the AIP 210 is configured to change the one or more models 230 in response to changes to the sensor data collected via the one or more sensors 220. In certain examples, the AIP 210 is configured to change the one or more models 230 without affecting the connection to the one or more sensors 220. In some examples, the AIP 210 is configured to upgrade the one or more models 230 without affecting the connection to the one or more sensors 220. In certain examples, the AIP 210 is configured to replace the one or more models 230 with a new model without affecting the connection to the one or more sensors 220. In some examples, the one or more models 230 is changed, upgraded, and/or replaced by a push operation in the deployment environment 200.

According to some embodiments, the AIP 210 is configured to interact with the corresponding sensor 220 to send one or more command(s) to the sensor and control how the sensor captures the data. In some embodiments, the AIP is configured to interact with the sensor to send one or more command(s) to the sensor and control how the sensor captures the data based on one or more user inputs and/or inference configurations. In one example, the AIP system is looking at a target (e.g., a car) or looking for a target (e.g., a car with specific characteristics). In some examples, the AIP 210 is configured to send a command to the sensor 220, where the sensor command includes one or more command parameters. In certain examples, the sensor command is sent via the sensor API 211. In some examples, the sensor command is compiled in complaint with the format of the sensor API 211.

In some embodiments, the command parameters include one or more target characteristics, one or more sensor parameters, one or more device parameters, and/or the like. For example, the one or more target characteristics include a type of object, a size of object, a color of object, a shape of object, a feature of object, and/or the like. In certain embodiments, the one or more sensor parameters include a type of sensor, a feature of sensor, a configuration of sensor, a sensing range, a sensing angle, and/or the like. In some examples, the sensor is an image sensor and the sensor parameters include a zooming parameter, a resolution parameter, a frame rate parameter, a gain parameter, a binning parameter, an image format parameter, and/or the like. In certain examples, the sensor includes an acoustic sensor, a transducer, an ultrasonic sensor, an infrared sensor, and/or the like. In certain embodiments, the one or more device parameters include a location parameter, a position parameter, a speed parameter, and/or the like. In some examples, the command includes a command to follow the target, for example, a command of an edge device following movements of the target.

According to certain embodiments, the AIP 210 is configured to receive one or more model inferences from the one or more models 230 via the inference API. In certain embodiments, the one or more model inferences include an identified target object and/or a target area. In some embodiments, the AIP 210 is configured to generate the sensor command based on the one or more model inferences. In certain embodiments, the AIP 210 is configured to send the sensor command to the sensor 220 via the sensor API 211.

According to some embodiments, the AIP 210 is configured to transmit the one or more model inferences to the one or more user devices 240, for example, via the open API 216. In certain embodiments, the user device 240 presents the model inferences to a user. In some embodiments, the user provides a user input via the user device. In some embodiments, the user input includes an identification of the target object. In certain embodiments, the user input includes an identification of the target area, for example, the target area associated with the target object. In some embodiments, the AIP 210 is configured to receive the user input from the user device 240, for example, via the open API 216. In certain embodiments, the AIP 210 is configured to generate the sensor command based on the user input. In some embodiments, the AIP 210 is configured to generate the sensor command based on the one or more model inferences and the user input. In certain embodiments, the AIP 210 is configured to send the sensor command to the sensor 220 via the sensor API 211.

According to certain embodiments, the AIP system include two modes of sensor cueing. In some embodiments, one mode of sensor cueing will use one or more user inputs. For example, the AIP receives a processing result from a computing model and the output of AIP is sent to a user device, where the user can see the processing result (e.g., the inferences), so that the user can interact with the processing result, for example, the user can identify the target object (e.g., a single object, two or more objects) in the processing result and request to track the target object. As another example, the user may request the sensor and the edge device to move closer to the target object or an area, and the AIP is configured to generate the sensor command incorporating such request. In some embodiments, using the sensor commands, the AIP system can collect more relevant sensor data that allows meaningful inferences.

In some embodiments, one mode of sensor cueing is based on one or more model inferences and model processing results. In certain embodiments, the one or more model inferences (e.g., model processing results) include an identification of a target object. In some embodiments, the one or more model processing results include an identification of an area. In certain embodiments, the one or more model inferences include an identification of an area associated with the target object. In some embodiments, the one or more model inferences include corresponding confidence levels. In certain examples, the AIP receives the model inferences and generates the sensor command based upon the model inferences, for example, using the target object, the area associated with the target object, and/or the confidence level.

According to certain embodiments, the AIP system is configured to use sensor cueing to improve the performance of the sensor, for example, to collect more relevant data from the sensor. In some embodiments, the AIP system is configured to improve the model, for example, by changing the model parameter or replacing the model, to improve the performance of the sensor.

In some examples, the AIP 210 is configured to receive one or more model inferences and/or one or more user inputs and generate the sensor command to send to the sensor 220. In certain examples, based on the sensor command, the sensor 220 is configured to adjust one or more sensor parameters. In some examples, the sensor 220 is configured to extract the one or more sensor parameters from the sensor command. In certain examples, the sensor 220 is configured to adjust one or more sensor parameters based on the command parameters in the sensor command. For example, the sensor 220 is configured to take images of a smaller area (e.g., 3 by 3 miles) instead of a bigger area (e.g., 5 by 5 miles). In some examples, the AIP 210 is configured to receive better model inferences generated by models using the sensor data collected by the sensor 220.

According to certain embodiments, the AIP 210 is configured to change the one or more sensors 220 coupled via the data API 212 dynamically. In certain examples, the AIP 210 is configured to change the one or more sensors 220 based upon a configuration (e.g., a system configuration, a user configuration) and/or an input (e.g., a user input, an input received via a software interface). In some examples, the AIP 210 is configured to change the one or more sensors 220 or add a coupled sensor automatically or dynamically, for example, based on a command received via a software interface.

According to some embodiments, the AIP controller 218 can be used to configure, control, and/or manage the one or more AIPs 210, including managing components to be coupled to the one or more AIPs 210. In certain examples, the AIP controller 218 is configured to send a request to the AIP 210 to make changes to the one or more sensors 220 and/or make changes to the one or more models 230. In certain embodiments, at least one of the one or more user devices 240 includes an AIP controller 218. In some embodiments, at least one of the one or more edge devices 205 includes an AIP controller 218. In some examples, the AIP controller 218 includes a user interface (e.g., a graphical user interface). In certain examples, the AIP controller 218 allows a user to select one or more algorithms to be added to a model 230, for example, via the model controller 219 and/or the container infrastructure 250. In some examples, the AIP controller 218 allows a user to select one or more algorithms to be updated to a model 230, for example, via the model controller 219 and/or the container infrastructure 250.

According to certain embodiments, the AIP controller 218 allows a user to select or deploy a new or updated model 230 to the AIP 210. In some embodiments, the AIP controller 218 allows a user to select to deploy a new or updated model 230 to the AIP 210, for example, via the model controller 219 and/or the container infrastructure 250. In some examples, the AIP controller 218 allows a user to configure a processing pipeline (e.g., order, schedule, latency, etc.) for using one or more models, one or more processors, and/or one or more edge devices. In some embodiments, the AIP controller 218 is configured to use a message (e.g., a low bandwidth message) to the AIP 210. In certain examples, in response to receiving the message, the AIP 210 updates the one or more models for deployment, for example, by loading the one or more models for a same hosting device or a local device (e.g., a computing device close by, a computing device connected by wire).

According to some embodiments, the AIP 210, the one or more sensors 220, and the one or more models 230 are disposed in an edge device 205. For example, the edge device 205 is a satellite, and the sensor 220 is an orbiting sensor. As an example, an edge device is an aircraft, a submarine, and/or a vehicle. As an example, an edge device includes one or more sensors in the air, in the space, under the sea, in the water, on the land, and/or at other locations. In certain examples, an edge device is a physical device including one or more sensors, an AIP, an AIP controller and/or one or more model(s). In some examples, the one or more models 230 is configured to generate an insight based on the processed sensor data. As used herein, an insight refers to an output of a computing model. In certain examples, the open API 216 is configured to couple to the user device 240. In some examples, the AIP 210 is configured to transmit collected sensor data, processed sensor data, and/or the insight to the user device 240. In certain examples, the open API 216 is configured to broadcast to a network.

According to certain embodiments, the AIP operation environment 200 includes one or more edge devices 205, one or more user devices 240, and/or one or more model repositories 260, each or in combination, may include or have access to one or more memory repositories (e.g., data repositories, application repositories). In some embodiments, the data repository(s) (not shown) can include sensor data, processed sensor data, model data, model configuration data, AIP configuration, and/or the like. The data repository and/or the application repository may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

In some cases, various components in the AIP operation environment 200 can execute software or firmware stored in non-transitory computer-readable medium (e.g., application repository) to implement various processing steps. Various components and processors of the operation software environment 200 can be implemented by one or more computing devices, including but not limited to, circuits, a computer, a cloud-based processing unit, a processor, a processing unit, a microprocessor, a mobile computing device, and/or a tablet computer. In some cases, various components of the operation software environment 200 (e.g., the one or more edge devices 205, the one or more user devices 240, etc.) can be implemented on a shared computing device. Alternatively, a component of the AIP operation environment 200 can be implemented on multiple computing devices. In some implementations, various modules and components of the operation software environment 200 can be implemented as software, hardware, firmware, or a combination thereof. In some cases, various components of the AIP operation environment 200 can be implemented in software or firmware executed by a computing device.

Various components of the AIP operation environment 200 can communicate via or be coupled to via a communication interface, for example, a wired or wireless interface. The communication interface includes, but not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

As discussed above and further emphasized here, FIG. 2 is merely an example. One of ordinary skill in the art would recognize many variations, alternatives, and modifications. For example, a sensor 220 is replaced by a sub-system that includes one or more components that are not sensors. As an example, a one or more models 230 is a micro-model. As an example, at least one of the one or more resources 255 includes a control software (e.g., control layer) interfacing with the container infrastructure 250.

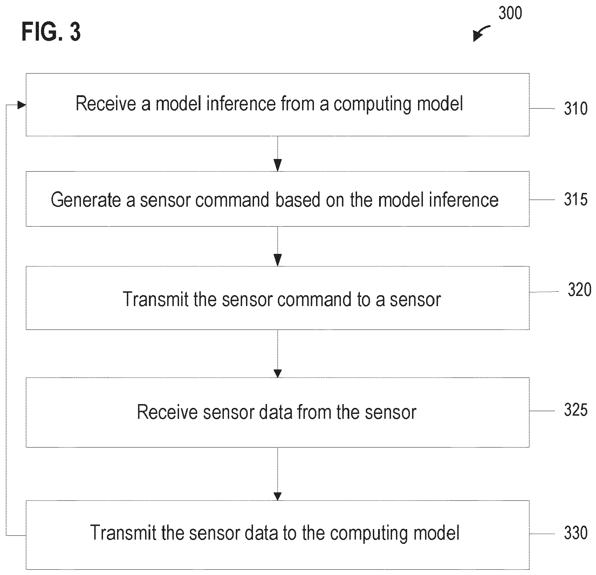

FIG. 3 is a simplified diagram showing a method 300 for AIP sensor cueing according to certain embodiments of the present disclosure. This diagram is merely an example. One of ordinary skill in the art would recognize many variations, alternatives, and modifications. The method 300 for designing an application with action logs includes processes 310, 315, 320, 325, and 330. Although the above has been shown using a selected group of processes for the method 300 for designing an application with action logs, there can be many alternatives, modifications, and variations. For example, some of the processes may be expanded and/or combined. Other processes may be inserted to those noted above. Depending upon the embodiment, the sequence of processes may be interchanged with others replaced. Further details of these processes are found throughout the present disclosure.

In some embodiments, some or all processes (e.g., steps) of the method 300 are performed by the system 600. In certain examples, some or all processes (e.g., steps) of the method 300 are performed by a computer and/or a processor directed by a code. For example, a computer includes a server computer and/or a client computer (e.g., a personal computer). In some examples, some or all processes (e.g., steps) of the method 300 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at the process 310, the AIP system (e.g., an AIP system in the environment 100 in FIG. 1, an AIP system in the environment 200 in FIG. 2) and/or the AIP (e.g., the AIP 110 in FIG. 1, the AIP 210 in FIG. 2) is configured to receive a model inference from a computing model (e.g., the model 130 in FIG. 1, the model 230 in FIG. 2). In certain embodiments, the model inference is generated from the computing model using a first set of sensor data, for example, from one or more sensors.

According to certain embodiments, at the process 315, the AIP system and/or the AIP is configured to generate a sensor command based on the model inference. In some examples, the sensor command includes one or more command parameters. In some embodiments, the command parameters include one or more target characteristics, one or more sensor parameters, one or more device parameters, and/or the like. For example, the one or more target characteristics include a type of object, a size of object, a color of object, a shape of object, a feature of object, and/or the like. In certain embodiments, the one or more sensor parameters include a type of sensor, a feature of sensor, a configuration of sensor, a sensing range, a sensing angle, and/or the like. In some examples, the sensor is an image sensor and the sensor parameters include a zooming parameter, a resolution parameter, a frame rate parameter, a gain parameter, a binning parameter, an image format parameter, and/or the like. In certain examples, the sensor includes an acoustic sensor, a transducer, an ultrasonic sensor, an infrared sensor, and/or the like. In certain embodiments, the one or more device parameters include a location parameter, a position parameter, a speed parameter, and/or the like. In some examples, the command includes a command to follow the target, for example, a command of an edge device following movements of the target.

According to some embodiments, at the process 320, the AIP system and/or the SIP is configured to transmit the sensor command to a sensor (e.g., the sensor 120 in FIG. 1, the sensor 220 in FIG. 2). In certain embodiments, the sensor is configured to adjust sensor parameters based on the sensor command.

According to certain embodiments, at the process 325, the AIP system and/or the AIP is configured to receive sensor data collected from the sensor. In some embodiments, at the process 330, the AIP system and/or the AIP is configured to transmit the sensor data to one or more computing models, and/or a processing pipeline.

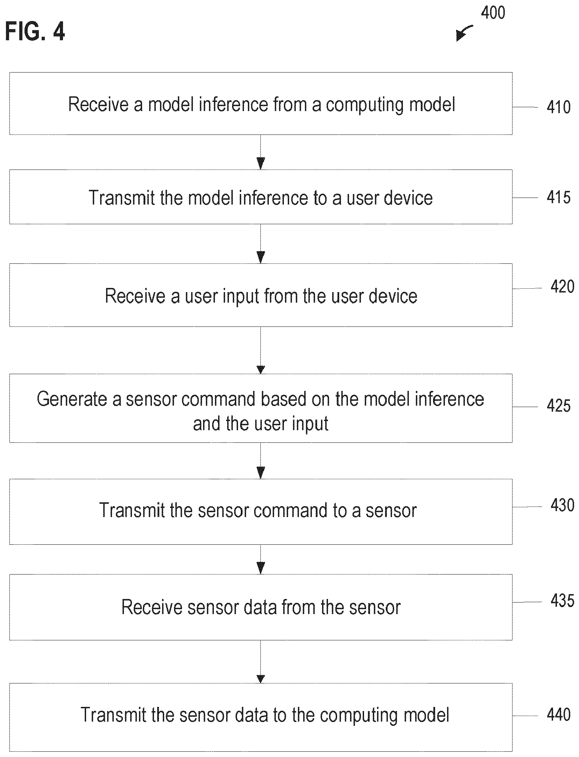

FIG. 4 is a simplified diagram showing a method 400 for AIP sensor cueing according to certain embodiments of the present disclosure. This diagram is merely an example. One of ordinary skill in the art would recognize many variations, alternatives, and modifications. The method 400 for designing an application with action logs includes processes 410, 415, 420, 425, 430, 435, and 440. Although the above has been shown using a selected group of processes for the method 400 for designing an application with action logs, there can be many alternatives, modifications, and variations. For example, some of the processes may be expanded and/or combined. Other processes may be inserted to those noted above. Depending upon the embodiment, the sequence of processes may be interchanged with others replaced. Further details of these processes are found throughout the present disclosure.

In some embodiments, some or all processes (e.g., steps) of the method 400 are performed by the system 600. In certain examples, some or all processes (e.g., steps) of the method 400 are performed by a computer and/or a processor directed by a code. For example, a computer includes a server computer and/or a client computer (e.g., a personal computer). In some examples, some or all processes (e.g., steps) of the method 400 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at the process 410, the AIP system (e.g., an AIP system in the environment 100 in FIG. 1, an AIP system in the environment 200 in FIG. 2) and/or the AIP (e.g., the AIP 110 in FIG. 1, the AIP 210 in FIG. 2) is configured to receive a model inference from a computing model (e.g., the model 130 in FIG. 1, the model 230 in FIG. 2). In certain embodiments, the model inference is generated from the computing model using a first set of sensor data, for example, from one or more sensors.

According to certain embodiments, at the process 415, the AIP system and/or the AIP is configured to transmit the model inference to a user device (e.g., the user device 140 in FIG. 1, the user device 240 in FIG. 2). In some embodiments, at the process 420, the AIP system and/or the AIP is configured to receive a user input from the user device.

According to some embodiments, at the process 425, the AIP system and/or the AIP is configured to generate a sensor command based on the model inference and the user input. In some examples, the sensor command includes one or more command parameters. In some embodiments, the command parameters include one or more target characteristics, one or more sensor parameters, one or more device parameters, and/or the like. For example, the one or more target characteristics include a type of object, a size of object, a color of object, a shape of object, a feature of object, and/or the like. In certain embodiments, the one or more sensor parameters include a type of sensor, a feature of sensor, a configuration of sensor, a sensing range, a sensing angle, and/or the like. In some examples, the sensor is an image sensor and the sensor parameters include a zooming parameter, a resolution parameter, a frame rate parameter, a gain parameter, a binning parameter, an image format parameter, and/or the like. In certain examples, the sensor includes an acoustic sensor, a transducer, an ultrasonic sensor, an infrared sensor, and/or the like. In certain embodiments, the one or more device parameters include a location parameter, a position parameter, a speed parameter, and/or the like. In some examples, the command includes a command to follow the target, for example, a command of an edge device following movements of the target.

According to some embodiments, at the process 430, the AIP system and/or the SIP is configured to transmit the sensor command to a sensor (e.g., the sensor 120 in FIG. 1, the sensor 220 in FIG. 2). In certain embodiments, the sensor is configured to adjust sensor parameters based on the sensor command.

According to certain embodiments, at the process 435, the AIP system and/or the AIP is configured to receive sensor data collected from the sensor. In some embodiments, at the process 440, the AIP system and/or the AIP is configured to transmit the sensor data to one or more computing models, and/or a processing pipeline.

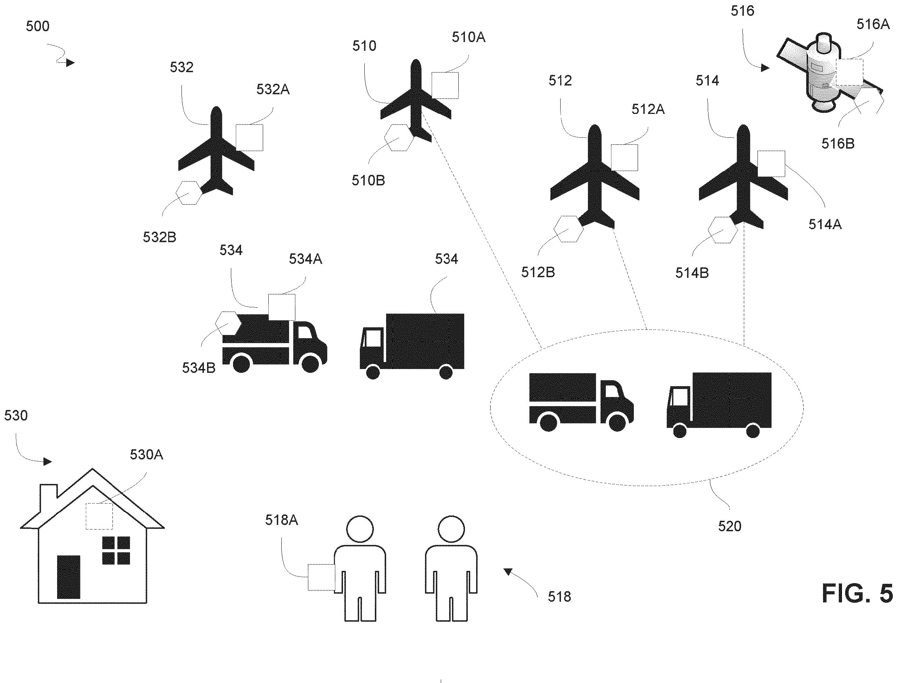

According to some embodiments, an example implementation of a deployment environment 500 for AIP is illustrated in FIG. 5. FIG. 5 is merely an example. One of ordinary skill in the art would recognize many variations, alternatives, and modifications. In one example, an aircraft 510, for example, on the other side of the mountain, detects (e.g., sees) one or more targets 520 and the aircraft 510 is configured to relay the detection back to a base device 530A in a base station 530 and/or one or more other edge devices (e.g., an aircraft 512, an aircraft 514, a satellite 516, one or more devices 518 (e.g., the user device 140 in FIG. 1, the user device 240 in FIG. 2) associated with one or more persons, an aircraft 532, one or more vehicles 534). In certain embodiments, each of the edge devices 510, 512, 514, 516, 532, 534 includes a corresponding AIP 510A, 512A, 514A, 516A, 532A, 534A, and corresponding one or more sensors 120, 512B, 514B, 516B, 532B, 534B. In certain embodiments, each edge device includes an AIP (e.g., the AIP 110 in FIG. 1, the AIP 210 in FIG. 2). In some embodiments, at least some of the edge devices include an AIP. In certain embodiments, at least one of the edge devices does not include an AIP.

In some embodiments, while an edge device (e.g., the aircraft 512) is collecting sensor data regarding a target (e.g., target 520), it may initiate, direct, and/or coordinate with another edge device (e.g., the aircraft 514) to collect sensor data regarding the same target (e.g., target 520). In one example, a first edge device 510 may launch or cause a second edge device 512 to collect sensor data regarding the same target 520, for example, collecting images and/or videos from a different angle to see whether the target is a certain type of object of interest. In some examples, the AIP 512A may receive a corresponding model request and select, load, and start a requested computing model. In certain examples, the AIP 512A may receive a model request and select, load, and start a requested computing model via a model controller (e.g., the model controller 109 in FIG. 1, the model controller 209 in FIG. 2). In some examples, a container infrastructure (e.g., the container infrastructure 150 in FIG. 1, the container infrastructure 250 in FIG. 2) is configured to receive container request(s) and in response to the container request(s), load, instantiate, and/or update a computing model for the model request. In certain examples, the container infrastructure is configured to allocate resources (e.g., processing resources, memory resources) for the computing model based upon the model request.

In certain embodiments, two or more edge devices are configured to collect sensor data and confirm, for example, by one of the two or more edge devices or another control device, that the collected sensor data from the two or more edge devices are associated with the same target. In some examples, the collected sensor data from the two or more edge devices are associated with the same target from different angles. In some embodiments, a first edge device provides the location information of the target and one or more other edge devices (e.g., the edge device 516) will collect sensor data of the target based on the location information. In one example, the second edge device (e.g., the edge device 516) may identify the target to be an object of interest (e.g., a newer vehicle), and the second edge device via the AIP and/or one or more other AIPs in the AIP system incorporating one or more AIPs is configured to direct a third edge device (e.g., the edge device 514) to collect sensor data regarding the target.

According to some embodiments, the AIP (e.g., 510A, 512A, 514A, 516A, 532A, 534A) is configured to interact with the corresponding sensor (e.g., 120, 512B, 514B, 516B, 532B, 534B) to send one or more command(s) to the sensor and control how the sensor captures the data. In some embodiments, the AIP is configured to interact with the sensor to send one or more command(s) to the sensor and control how the sensor captures the data based on one or more user inputs and/or inference configurations. In one example, the AIP system is looking at a target (e.g., a car) or looking for a target (e.g., a car with specific characteristics). In some examples, the AIP 510A is configured to send a command to the sensor 120, where the sensor command includes one or more command parameters. In certain examples, the sensor command is sent via the sensor API (e.g., the sensor API 111 in FIG. 1).

In some embodiments, the command parameters include one or more target characteristics, one or more sensor parameters, one or more device parameters, and/or the like. For example, the one or more target characteristics include a type of object, a size of object, a color of object, a shape of object, a feature of object, and/or the like. In certain embodiments, the one or more sensor parameters include a type of sensor, a feature of sensor, a configuration of sensor, a sensing range, a sensing angle, and/or the like. In some examples, the sensor is an image sensor and the sensor parameters include a zooming parameter, a resolution parameter, a frame rate parameter, a gain parameter, a binning parameter, an image format parameter, and/or the like. In certain examples, the sensor includes an acoustic sensor, a transducer, an ultrasonic sensor, an infrared sensor, and/or the like. In certain embodiments, the one or more device parameters include a location parameter, a position parameter, a speed parameter, and/or the like. In some examples, the command includes a command to follow the target, for example, a command of an edge device following movements of the target.

According to certain embodiments, the AIP system include two modes of sensor cueing. In some embodiments, one mode of sensor cueing will use one or more user inputs. For example, the AIP receives a processing result from a computing model and the output of AIP is sent to a user device, where the user can see the processing result (e.g., the inferences), so that the user can interact with the processing result, for example, the user can identify the target object (e.g., a single object, two or more objects) in the processing result and request to track the target object. As another example, the user may request the sensor and the edge device to move closer to the target object or an area, and the AIP is configured to generate the sensor command incorporating such request. In some embodiments, using the sensor commands, the AIP system can collect more relevant sensor data that allows meaningful inferences.

In some embodiments, one mode of sensor cueing is based on one or more model inferences and model processing results. In certain embodiments, the one or more model inferences (e.g., model processing results) include an identification of a target object. In some embodiments, the one or more model processing results include an identification of an area. In certain embodiments, the one or more model inferences include an identification of an area associated with the target object. In some embodiments, the one or more model inferences include corresponding confidence levels. In certain examples, the AIP receives the model inferences and generates the sensor command based upon the model inferences, for example, using the target object, the area associated with the target object, and/or the confidence level.

According to certain embodiments, the AIP system is configured to use sensor cueing to improve the performance of the sensor, for example, to collect more relevant data from the sensor. In some embodiments, the AIP system is configured to improve the model, for example, by changing the model parameter or replacing the model, to improve the performance of the sensor.

In some examples, the AIP 510A is configured to receive one or more model inferences and/or one or more user inputs and generate the sensor command to send to the sensor 120. In certain examples, based on the sensor command, the sensor 120 is configured to adjust one or more sensor parameters. In some examples, the sensor 120 is configured to extract the one or more sensor parameters from the sensor command. In certain examples, the sensor 120 is configured to adjust one or more sensor parameters based on the command parameters in the sensor command. For example, the sensor 120 is configured to take images of a smaller area (e.g., 3 by 3 miles) instead of a bigger area (e.g., 5 by 5 miles). In some examples, the AIP 510A is configured to receive better model inferences generated by models using the sensor data collected by the sensor 120.

According to certain embodiments, two or more edge devices may communicate with each other and make a determination that the collected sensor data is of a same target (e.g., the same vehicle). In some embodiments, the determination of the same target is done using location (e.g., space) and time information using one or more algorithms (e.g., one or more naive algorithms). In certain embodiments, the AIP system can make a determination of the same target using one or more sensor data (e.g., image data) and one or more models (e.g., computer vision models/algorithms). In one example, a computer vision algorithm on an edge device can determine that this is a same target from one or more different angles collected from one or more edge devices.

According to some embodiments, the AIP and/or the AIP system can use one or more protocols for communications among two or more components of the AIP systems. In certain embodiments, the AIP allows making decision all the way to the edge. In some embodiments, two or more edge devices each may have one or more sensors and may be at a location different from each other. In one example, the sensors at the two or more edge devices are configured to collect data regarding a same target (e.g., cameras taking pictures at the same target). In certain embodiments, the AIP and/or the AIP system can synchronize respective AIPS and two or more edge devices (e.g., the four edge devices 510, 512, 514, 516) that are collecting data associated with the same target. In some embodiments, the AIP and/or the AIP system can synchronize two or more edge devices to enhance the accuracy (e.g., the accuracy of the detection).

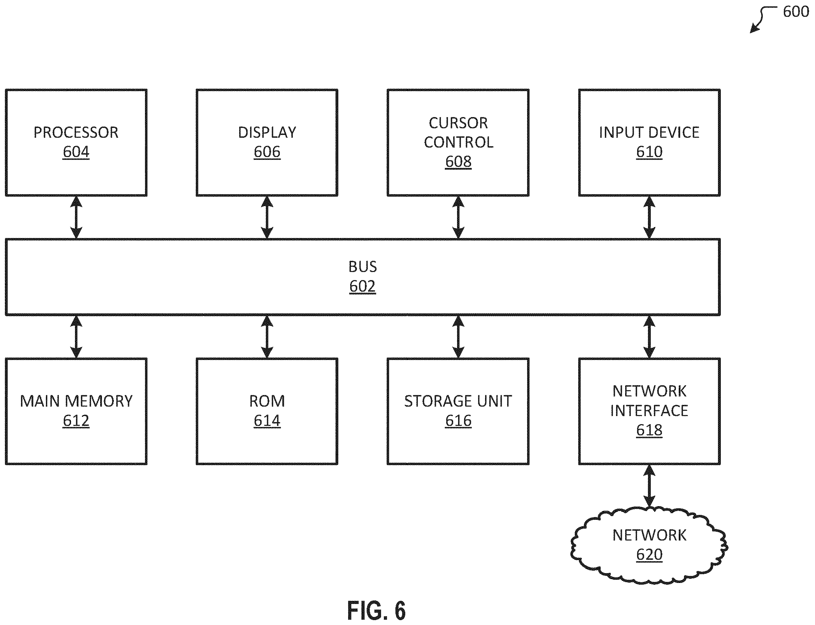

FIG. 6 is a simplified diagram showing a computing system 600 for implementing a system for sensor cueing according to one embodiment of the present invention. This diagram is merely an example, which should not unduly limit the scope of the claims. One of ordinary skill in the art would recognize many variations, alternatives, and modifications. The computing system 600 includes a bus 602 or other communication mechanism for communicating information, a processor 604, a display 606, a cursor control component 608, an input device 610, a main memory 612, a read only memory (ROM) 614, a storage unit 616, and a network interface 618. In some embodiments, some or all processes (e.g., steps) of the method 300 and/or 400 are performed by the computing system 600. In some examples, the bus 602 is coupled to the processor 604, the display 606, the cursor control component 606, the input device 610, the main memory 612, the read only memory (ROM) 614, the storage unit 616, and/or the network interface 618. In certain examples, the network interface is coupled to a network 620. For example, the processor 604 includes one or more general purpose microprocessors. In some examples, the main memory 612 (e.g., random access memory (RAM), cache and/or other dynamic storage devices) is configured to store information and instructions to be executed by the processor 604. In certain examples, the main memory 612 is configured to store temporary variables or other intermediate information during execution of instructions to be executed by processor 604. For examples, the instructions, when stored in the storage unit 616 accessible to processor 604, render the computing system 600 into a special-purpose machine that is customized to perform the operations specified in the instructions. In some examples, the ROM 614 is configured to store static information and instructions for the processor 604. In certain examples, the storage unit 616 (e.g., a magnetic disk, optical disk, or flash drive) is configured to store information and instructions.

In some embodiments, the display 606 (e.g., a cathode ray tube (CRT), an LCD display, or a touch screen) is configured to display information to a user of the computing system 600. In some examples, the input device 610 (e.g., alphanumeric and other keys) is configured to communicate information and commands to the processor 604. For example, the cursor control 608 (e.g., a mouse, a trackball, or cursor direction keys) is configured to communicate additional information and commands (e.g., to control cursor movements on the display 606) to the processor 604.

According to some embodiments, a method for sensor cueing comprises: receiving a model inference from a computing model using a first set of sensor data, the model inference associated with a target object; generating a sensor command based at least in part upon the model inference, the sensor command comprising one or more object parameters associated with the target object and one or more sensor parameters associated with a sensor; and transmitting the sensor command to the sensor via a sensor API. The method is performed using one or more processors. For example, the method is implemented according to at least FIG. 1, FIG. 2, FIG. 3, and/or FIG. 4.

In some embodiments, the method further includes the steps of: transmitting the model inference to a user device; receiving a user input from the user device; and generating the sensor command based at least in part upon the model inference and the user input. In certain embodiments, the sensor is configured to change a sensor configuration, wherein the sensor configuration is associated with the one or more sensor parameters in the sensor command. In some embodiments, the sensor is configured to change a sensor configuration, wherein the sensor configuration is in accordance with the one or more sensor parameters in the sensor command. In certain embodiments, the sensor is configured to change the one or more sensor parameters based upon the sensor command. In some embodiments, the one or more sensor parameters include a target area in which the sensor is configured to gather the first set of sensor data, and the sensor is configured to decrease or increase the target area based upon the sensor command. In certain embodiments, the method further the step of receiving a second set of sensor data collected by the sensor after the sensor changes the one or more sensor parameters based upon the sensor command. In some embodiments, the sensor command includes at least one action command selected from a group consisting of: a command instructing an edge device associated with the sensor to follow one or more movements of the target object; a command instructing the sensor to follow the one or more movements of the target object; and a command instructing the edge device to move closer to the target object. In certain embodiments, the sensor is an image sensor, and the one or more sensor parameters include at least one selected from a group consisting of: a zooming parameter, a resolution parameter, a frame rate parameter, a gain parameter, a binning parameter, and an image format parameter. In certain examples, the computing model includes a large language model (LLM).

According to certain embodiments, a system for sensor cueing comprises: one or more memories comprising instructions stored thereon; and one or more processors configured to execute the instructions and perform operations comprising: receiving a model inference from a computing model using a first set of sensor data, the model inference associated with a target object; generating, by the one or more processors, a sensor command based at least in part upon the model inference, the sensor command comprising one or more object parameters associated with the target object and one or more sensor parameters associated with a sensor; and transmitting the sensor command to the sensor via a sensor API. For example, the system is implemented according to at least FIG. 1, FIG. 2, FIG. 3, and/or FIG. 4.

In some embodiments, the operation further includes the steps of: transmitting the model inference to a user device; receiving a user input from the user device; and generating the sensor command based at least in part upon the model inference and the user input. In certain embodiments, the sensor is configured to change a sensor configuration, wherein the sensor configuration is associated with the one or more sensor parameters in the sensor command. In some embodiments, the sensor is configured to change a sensor configuration, wherein the sensor configuration is in accordance with the one or more sensor parameters in the sensor command. In certain embodiments, the sensor is configured to change the one or more sensor parameters based upon the sensor command. In some embodiments, the one or more sensor parameters include a target area in which the sensor is configured to gather the first set of sensor data, and the sensor is configured to decrease or increase the target area based upon the sensor command. In certain embodiments, the operations further the step of receiving a second set of sensor data collected by the sensor after the sensor changes the one or more sensor parameters based upon the sensor command. In some embodiments, the sensor command includes at least one action command selected from a group consisting of: a command instructing an edge device associated with the sensor to follow one or more movements of the target object; a command instructing the sensor to follow the one or more movements of the target object; and a command instructing the edge device to move closer to the target object. In certain examples, the computing model includes a large language model (LLM).

According to some embodiments, a method for sensor cueing includes: receiving a model inference from a computing model using a first set of sensor data, the model inference associated with a target object and a target area associated with the target object; transmitting the model inference to a user device; receiving, from the user device, a user input comprising an identification of the target object or the target area; generating a sensor command based at least in part upon the model inference and the user input, the sensor command comprising one or more object parameters associated with the target object, and one or more sensor parameters associated with a sensor; and transmitting the sensor command to the sensor via a sensor API. The method is performed using one or more processors. For example, the method is implemented according to at least FIG. 1, FIG. 2, FIG. 3, and/or FIG. 4.

In some embodiments, the sensor is configured to change the one or more sensor parameters based upon the sensor command. In certain embodiments, the one or more sensor parameters include the target area received in the user input, and the sensor is configured to decrease or increase the target area based upon the sensor command. In some embodiments, the method further includes: receiving a second set of sensor data collected by the sensor after the sensor changes the one or more sensor parameters based upon the sensor command. In certain embodiments, the sensor command includes at least one action command selected from a group consisting of: a command instructing an edge device associated with the sensor to follow one or more movements of the target object; a command instructing the sensor to follow the one or more movements of the target object; and a command instructing the edge device to move closer to the target object. In certain examples, the computing model includes a large language model (LLM).

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented for example as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated. It should also be understood that all U.S. patents, patent application publications, and other patent and non-patent documents referred to herein are incorporated by reference, to the extent they do not contradict the foregoing disclosure.

## Claims

1. A method for sensor cueing performed using one or more processors, the method comprising:
receiving a model inference from a computing model using a first set of sensor data, the model inference associated with a target object;
generating a sensor command based at least in part upon the model inference, the sensor command comprising one or more object parameters associated with the target object and one or more sensor parameters associated with a sensor; and
transmitting the sensor command to the sensor via a sensor API.

2. The method of claim 1, further comprising:
transmitting the model inference to a user device; and
receiving a user input from the user device;
wherein the sensor command is generated based at least in part upon the model inference and the user input.

3. The method of any preceding claim, wherein the sensor is configured to change a sensor configuration, wherein the sensor configuration is associated with or is in accordance with the sensor parameter in the sensor command.

4. The method of any preceding claim, wherein the sensor is configured to change the one or more sensor parameters based upon the sensor command.

5. The method of claim 4, wherein the one or more sensor parameters include a target area in which the sensor is configured to gather the first set of sensor data, and the sensor is configured to decrease or increase the target area based upon the sensor command.

6. The method of claim 4 or claim 5, further comprising:
receiving a second set of sensor data collected by the sensor after the sensor changes the one or more sensor parameters based upon the sensor command.

7. The method of any preceding claim, wherein the sensor command includes at least one action command selected from a group consisting of:
a command instructing an edge device associated with the sensor to follow one or more movements of the target object;
a command instructing the sensor to follow the one or more movements of the target object; and
a command instructing the edge device to move closer to the target object.

8. The method of any preceding claim, wherein the sensor is an image sensor, and the one or more sensor parameters include at least one selected from a group consisting of: a zooming parameter, a resolution parameter, a frame rate parameter, a gain parameter, a binning parameter, and an image format parameter.

9. The method of any preceding claim, wherein the computing model includes a large language model.

10. A system for sensor cueing, the system comprising:
one or more memories comprising instructions stored thereon; and
one or more processors configured to execute the instructions and perform operations in accordance with the steps of any of claims 1 to 9.

11. A method for sensor cueing performed using one or more processors, the method comprising:
receiving a model inference from a computing model using a first set of sensor data, the model inference associated with a target object and a target area associated with the target obj ect;
transmitting the model inference to a user device;
receiving, from the user device, a user input comprising an identification of the target object or the target area;
generating a sensor command based at least in part upon the model inference and the user input, the sensor command comprising one or more object parameters associated with the target object, and one or more sensor parameters associated with a sensor; and
transmitting the sensor command to the sensor via a sensor API.

12. The method of claim 11, wherein the sensor is configured to change the one or more sensor parameters based upon the sensor command.

13. The method of claim 12, wherein the one or more sensor parameters include the target area received in the user input, and the sensor is configured to decrease or increase the target area based upon the sensor command.

14. The method of claim 12 or claim 13, further comprising:
receiving a second set of sensor data collected by the sensor after the sensor changes the one or more sensor parameters based upon the sensor command.

15. The method of any of claims 11 to 14, wherein the sensor command includes at least one action command selected from a group consisting of:
a command instructing an edge device associated with the sensor to follow one or more movements of the target object;
a command instructing the sensor to follow the one or more movements of the target object; and
a command instructing the edge device to move closer to the target object.

16. The method of any of claims 11 to 15, wherein the computing model includes a large language model.
